# EUROPEAN PATENT SPECIFICATION

(11) **EP 3 724 666 B1**
(45) Date of publication and mention of the grant of the patent: **26.05.2021**
(21) Application number: 18839767.3
(22) Date of filing: 11.12.2018
(51) Int. Cl.: G01P 15/093

(54) **DEFORMABLE FRAME FOR AN ACCELEROMETER**
VERFORMBARER RAHMEN FÜR EINEN BESCHLEUNIGUNGSMESSER
CADRE DÉFORMABLE POUR ACCÉLÉROMÈTRE

(30) Priority: 12.12.2017 NL 2020070
(43) Date of publication of application: 21.10.2020
(73) Proprietor: Optics11 B.V., 1081 HV Amsterdam (NL)
(72) Inventor: MEIJER, Eric, 2264 SG Leidschendam (NL); KNOPPERS, German Enrique, 2264 SG Leidschendam (NL); KARABACAK, Devrez Mehmet, 2264 SG Leidschendam (NL); MEULBLOK, Bastiaan, 2264 SG Leidschendam (NL)
(74) Representative: den Braber, Gérard Paul
(86) International application number: PCT/NL2018/050830
(87) International publication number: WO 2019/117713

(56) References cited:
- WO-A1-2016/182428
- US-A- 3 060 333
- US-A1- 2011 074 247
- US-A1- 2014 369 641

## Description

### TECHNICAL FIELD AND BACKGROUND

The present disclosure relates to a fiber optic accelerometer, a system comprising the accelerometer, a deformable frame for the accelerometer, and a method for manufacturing the frame.

For example, the international application WO 2016/182428 describes an optical sensor device comprising a reference body and at least one sensing transducer. The sensing transducer is arranged for moving relative to the reference body in response to an input action. The device further comprises an optical fiber and one or more transmission arms. The optical fiber comprises an intrinsic fiber optic sensor and is connected with a first connecting part to a first transmission arm and with a second connecting part to an element exterior to the first transmission arm. The first and second connecting parts are on either side of the intrinsic fiber optic sensor. A base of the first transmission arm is connected at a first part with the reference body and with a second part with the sensing transducer. The optical fiber is connected at a location along the first transmission arm remote from the base .

US 2014/369641 discloses a fiber optic sensor comprising stacked substrates with integrated optic fibers.

It is yet desired to provide a fiber optic accelerometer with improved versatility, e.g. easy manufacturing and/or adaptation to different applications.

### SUMMARY

One aspect of the present disclosure provides a deformable frame for a fiber optic accelerometer. Another or further aspect provides a method for manufacturing the frame. The frame typically comprises one or more attachment sections for attachment of the frame to an external structure whose acceleration is to be measured. At least one inertial section of the frame is configured to allow a relative inertial motion of its inertial mass with respect to the one or more accelerated attachment sections. Transmission arms are pivotably attached to respective bridge sections between the at least one inertial section and at least one attachment section. The transmission arms are connected such that the relative inertial motion of the inertial mass in a sensing direction causes a transverse motion in each of the transmission arms in respective transmission directions transverse to the sensing direction. The transverse motions of the transmission arms are in opposite directions for stretching and/or compressing an optical fiber with an optical strain sensor attached between respective fiber attachment points on said transmission arms.

The inventors find that particular benefits may be achieved when the frame is formed by an interconnected stack of modular plates. By constructing the frame from a stack of modular plates, e.g. having the same or similar construction, the frame can be easily adapted to specific needs. For example, an inertial mass of the frame can be changed by adding more or less plates to the stack. Alternatively, or in addition, rigidity of components and/or connections can be set by using a predetermined number of plates comprising said components and/or connections. In some cases, the accelerometer may operate most effectively around a frequency band determined by its resonance frequency. By tuning the inertial mass and/or rigidity (e.g. spring constant) of the accelerometer, the resonance frequency and hence the working range of the accelerometer can be adapted to different applications. Also, it will be appreciated that the modular plate shapes can be relatively easy to manufacture compared to a thick monolithic frame. Accordingly, the accelerometer may be more versatile.

By stacking the modular plates in a direction transverse to the sensing direction and/or the transmission directions, each plate may be formed to comprise a respective piece that performs part of the respective action. Typically, at least some of the modular plates in the stack are the same, e.g. have the same configuration and/or thickness. By providing two or more different types of modular plates in the stack, some plates can have different effects than others. For example some plates may comprise part of the inertial mass but not the transmission arms. In this way the inertial mass of the accelerometer frame can be tuned more or less separately from the rigidity of the transmission arms. Also other variations can be used, e.g. plates with less inertial mass and/or providing different stiffness/spring constant to the frame.

It may be advantageous from a manufacturing point of view to use modular plates having the same thickness. On the other hand, some plates may have different thickness for fine-tuning aspects of the accelerometer frame. For example, the modular plates may have a thickness less than one centimeter, less than five millimeter, or even less than one millimeter, e.g. between 0.1 - 10 mm. For example, a stack may comprise, two, three, four, five or more modular plates, e.g. between seven and twenty-five plates, or more.

In some designs, a transmission ratio of the relative inertial motion to the transmission arms can be tuned, e.g. by setting a predetermined length of the arms and/or setting the length of the bridge section at the base of the arms between the attachment section and the inertial section. In this way, the action of the arms on the attached fiber may be affected. Optionally, a mass of the transmission arms can be reduced for a given width, e.g. by drilling one or more holes in the arms. In this way the rotational inertia of the arms may be reduced, while maintaining sufficient rigidity.

While the accelerometer may be supported to an external frame using a single attachment section, it can be advantageous to provide further attachment sections to (linearly) guide and or support the inertial mass, e.g. with resilient connections there between. The further support sections may also be used to tune a spring constant of the accelerometer frame. To provide linear guidance along a sensing direction, it may be advantageous in some cases to provide a mirror-symmetric frame around the optical strain sensor in the middle. For example, a central attachment section may be disposed between legs extending from the inertial section. For example, the transmission arms may be disposed between a respective leg of the inertial section and the central attachment section. Accordingly, the inertial section can be symmetrically suspended between support sections at either side.

From a manufacturing point of view it can be advantageous to build each modular plate from a single flat plate shape. For example lines can be cut to at least partially separate different sections. For example, the attachment sections may be disconnected from the inertial section except for deformable bridges formed between cutout lines there between. For example, cutout lines between at least one of the attachment sections and the inertial section are cut in parallel lanes to form the respective bridge attachment points there between. To form a more resilient connection, cutout lines between one or more support sections may be cut as intertwined fingers. Accordingly, the bridge sections and/or resilient sections may act as leaf springs when stacked together.

The plates may be connected to an external structure, e.g. by providing one or more of the support sections with respective attachment means such as holes which may be attached using corresponding pins. For example externally addressable holes can be provided in the attachment sections for attachment to the external structure. Alternatively, or in addition the inertial section and/or attachment sections may comprise interconnection means, e.g. a one or more holes for interconnecting the respective section parts of the plates to form the stacked frame. Alternative to the holes, also other connection means can be envisaged for interconnecting the plates and/or connection the attachment sections to the external frame. For example, the plates can be welded or glued together and or to the external frame.

In some aspects, the frame as described herein may be formed in a manufacturing method comprising interconnecting a stack of modular plates. For example, the method may comprise determining a desired resonance frequency of the frame and combining modular plates to achieve an inertial mass and/or stiffness of the frame matching the desired resonance frequency.

It will further be understood that aspects of the present disclosure may be embodied in a fiber optic accelerometer comprising the frame as described herein combined with other means, e.g. an optical fiber attached to the transmission arms with an optical strain sensor there between. For example, the optical strain sensor may comprise a Fiber Bragg Grating (FBG). The accelerometer may also be part of a larger system for measuring acceleration of a structure. For example the system may comprise the accelerometer as described herein attached with one or more of its attachment sections to the structure. Also other components may be included in the system, e.g. an optical interrogator for reading out the optical strain sensor. In some embodiments, it may be advantageous to provide the external structure with extra fiber attachment point around the respective fiber attachment points for pre-stretching the optical fiber.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 illustrates a perspective view of an embodiment of a fiber optic accelerometer;
FIGs 2A and 2B illustrate perspective views of different types of modular plates;
FIG 3 schematically illustrates a front view of a central part of the frame;
FIG 4 schematically illustrates a front view of a side part of the frame;
FIGs 5A and 5B illustrate perspective views of a fiber optic accelerometer by different external structures.

### DESCRIPTION OF EMBODIMENTS

In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. The description of the exemplary embodiments is intended to be read in connection with the accompanying drawings, which are to be considered part of the entire written description. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

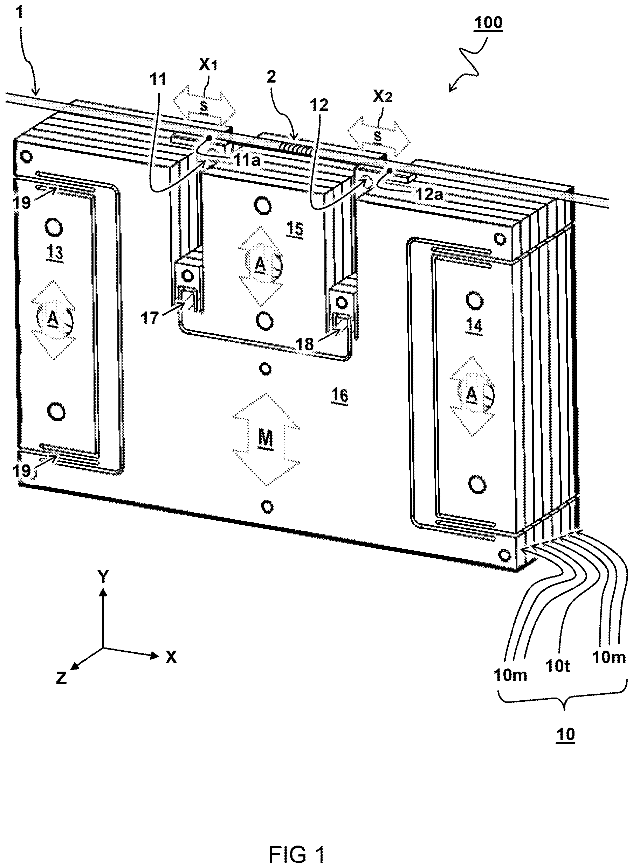

FIG 1 illustrates a perspective view of an embodiment of a fiber optic accelerometer 100. The accelerometer 100 typically comprises an optical fiber 1 attached to a deformable frame 10.

In the embodiment shown, the frame 10 comprises one or more attachment sections 13,14,15 for attachment of the frame 10 to an external structure 20 whose acceleration A is to be measured (direction indicated by arrow). At least one inertial section 16 is configured to allow a relative inertial motion M of its inertial mass with respect to the one or more accelerated attachment sections 13,14,15.

In a preferred embodiment, transmission arms 11,12 are pivotably attached to respective bridge sections 17,18 between the at least one inertial section 16 and at least one attachment section 15. The attachment is preferably such that the relative inertial motion M of the inertial mass in a sensing direction Y causes a transverse motion S in each of the transmission arms 11,12 in respective transmission directions X1,X2 transverse to the sensing direction Y. Typically, the transverse motions S of the transmission arms 11,12 are in opposite directions X1,X2 for stretching and/or compressing an optical fiber 1 with an optical strain sensor 2 attached between respective fiber attachment points 11a, 12a on said transmission arms 11,12.

As described herein, it is preferable that the frame 10 is formed by an interconnected stack of modular plates 10m, 10t. In one embodiment, the modular plates 10m,10t are stacked in a stacking direction Z transverse to both the sensing direction Y and the transmission directions X1,X2. For example, the sensing direction Y is in plane of the modular plates For example, the transmission directions X1,X2 are in plane of the modular plates 10m,10t.

In one embodiment, each modular plate 10m, lOt comprises a single flat plate shape with cutout lines between the sections 13,14,15,16. In another or further embodiment, the attachment sections 13,14,15 are disconnected from the inertial section 16 except for deformable bridges 17,18,19 formed between cutout lines there between. In one embodiment, cutout lines between at least one of the attachment sections 15 and the inertial section 16 are cut in parallel lanes to form the respective bridge attachment points there between.

In one embodiment, the frame 10 is mirror-symmetric around the optical strain sensor 2 in the middle. In another or further embodiment, a central attachment section 15 is disposed between legs extending from the inertial section 16. For example, the transmission arms 11,12 are disposed between a respective leg of the inertial section 16 and the central attachment section 15. In some embodiments, the inertial section 16 is disposed between the support sections 13,14

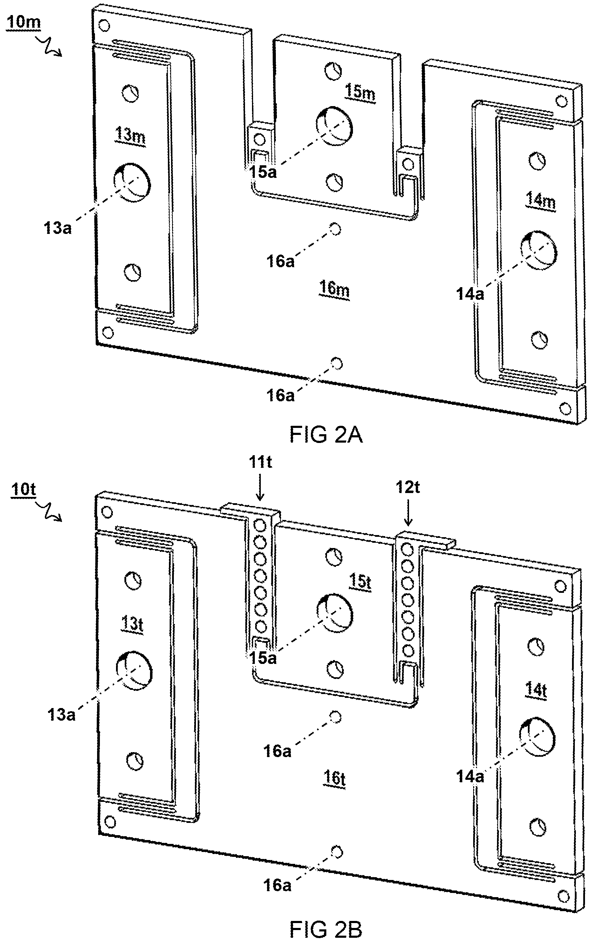

FIGs 2A and 2B illustrate perspective views of two distinct types of modular plates 10m,10t that may form the stack of the frame 10 according to some embodiments. FIG 2A illustrates an example of a 'mass'-type plate 10m comprising at least a part 16m of the inertial section 16. FIG 2B illustrates an example of a 'transmission'-type plate 10t comprising at least respective parts 11t,12t of the transmission arms 11,12.

In one embodiment, the total inertial mass of the accelerometer 100 is variable by interconnection of a variable number of the modular plates 10m,10t. For example, a thickness of the frame 10 is determined by a sum of thicknesses of the modular plates 10m, 10t. In the embodiment shown, the modular plates have the same thicknesses. Alternatively, some plates may have different thickness. For example, the total inertial mass of the accelerometer frame may be variable by interconnection of respective parts 16m of the inertial section 16.

In another or further embodiment, a rigidity of the transmission arms 11,12 is variable by interconnection of a variable number of the transmission-type plates 10t. As may be observed by comparing the embodiments of FIG 2, the mass-type plate 10m is similar to the transmission-type plate but has no transmission arms 11,12, at least not extending to the position of the optical fiber 1.

In some embodiments, a resonance frequency of the accelerometer 100 is variable by interconnection of a variable number and/or type of the modular plates 10m,10t. In one embodiment, the attachment sections 13,14,15 comprise one or more support sections 13,14 for supporting the inertial section 16 via respective resilient sections 19. For example, a spring constant of the resilient sections 19 may have a small effect on the resonance frequency of the frame. A main tunability of the resonance frequency may stem from the transmission ratio. For example, one method for constructing a deformable frame 10 comprises forming the frame 10 by interconnecting a stack of modular plates 10m, 10t. In one embodiment, the method comprises determining a desired resonance frequency of the frame 10 and combining modular plates 10m, 10t to achieve an inertial mass and/or stiffness of the frame matching the desired resonance frequency. In a further embodiment, the dimensions of the transmission arm 11 are adjusted to change the resonance frequency, and therefore its operational frequency range, and the sensitivity of the system to vibrations.

In some embodiments, one or more of the support sections 13,14,15 respective attachment means, e.g. holes 13a, 14a, 15a for attachment of to an external structure (not shown here). For example, the plates comprise externally addressable holes 13a,14a,15a in the attachment sections 13,14,15 for attachment to the external structure. For example, the inertial section 16 and/or attachment sections 13,14,15 comprises interconnection means, e.g. a one or more holes 16a for interconnection of respective parts of the inertial section 16 on each modular plate. Alternatively, or in addition, plates may be interconnected by other means.

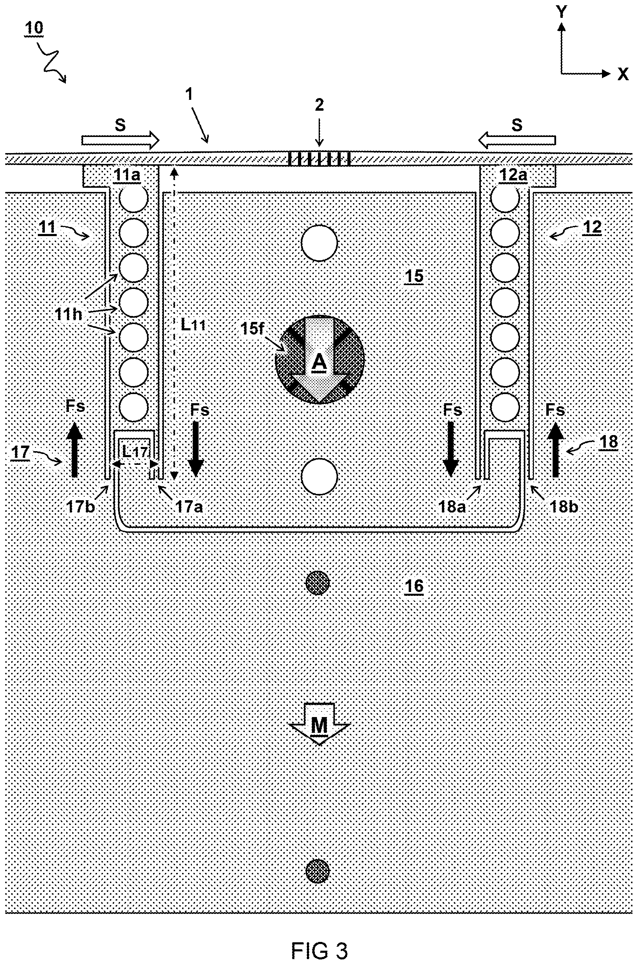

FIG 3 schematically illustrates a front view of a central part of the frame 10. The illustration includes a central attachment section 15, the inertial section 16 and the transmission arms 11,12 held there between by respective bridge sections 17,18. For example, the bridge sections comprise narrow connection points 17a,17b and 18a,18b which can provide a predefined resilience or movability to the transmission arms with respect to the inertial section.

In one embodiment, the attachment section 15 is attached via a fixture 15f to an external frame (not shown here). As an example, a downward acceleration A of the external frame may result in pulling down of the attachment section 15, The arrow M indicates a relative motion of the inertial section 16 which due to inertia may lag in time behind the acceleration A, e.g. having different phase and/or magnitude. The relative inertial motion M of the inertial section 16 with respect to the attachment section 15 may result in stress forces Fs in the frame. These stress forces Fs may affect the bridge sections 17, 18 which in turn may cause pivoting of the transmission arms 11,12 resulting in motions S that compress in this case the optical fiber 1 at the position of optical strain sensor 2 between the transmission arms 11,12. The compression of the optical strain sensor 2 may be read out. For example, the sensor 2 may be interrogated by optical means as a shifting of a reflection peak and/or transmission dip, e.g. depending on the periodicity of the FBG. Of course an analogous but opposite effect may occur for an upward acceleration A (not shown) ultimately stretching the optical fiber 1 at the position of the optical strain sensor 2.

In the embodiment shown, a bridge length L17 of a respective bridge section 17 extends between a respective first bridge attachment point 17a on a side of the attachment section 15 and a respective second bridge attachment point 17b on a side of the inertial section 16. Furthermore, an arm length L11 of a respective transmission arm 11,12 extends between the respective bridge section 17 and the respective fiber attachment point 11a. In some embodiments, a ratio between the arm length L11 of the respective transmission arm 11 and the bridge length L17 of the respective bridge section 17 determines a transmission ratio with which a inertial motion M of the inertial mass along the sensing direction Y is transmitted by the respective transmission arm 11,12 in the transverse motion S along the respective transmission direction X for stretching and/or compressing the optical fiber 1. In the embodiment shown, the transmission arms 11,12 comprise holes 11h in for reducing their rotational inertia at a given bridge length L17.

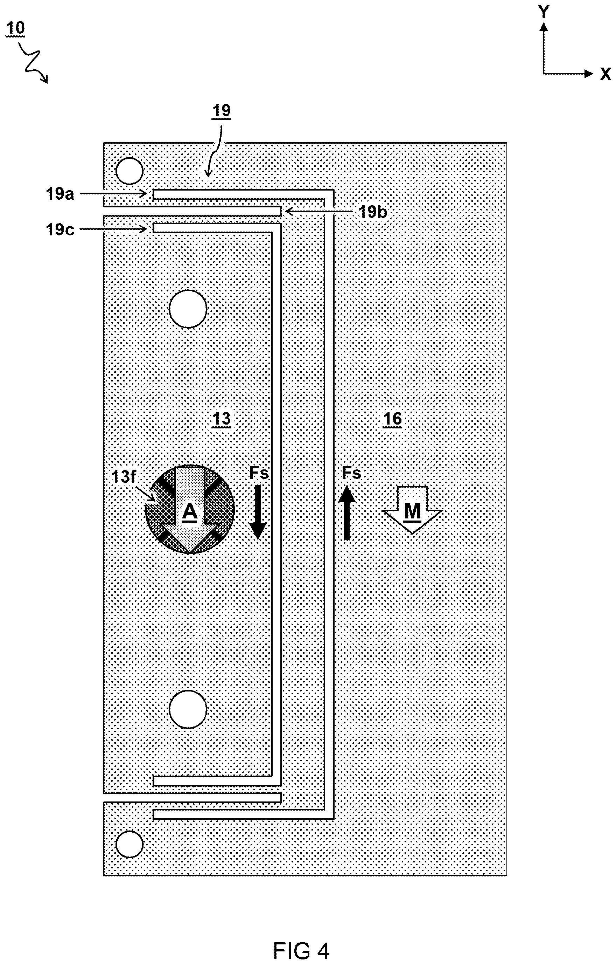

FIG 4 schematically illustrates a front view of a side part of the frame 10. The illustration includes the inertial section 16 and one of the support sections 13 separated there from by a resilient section 19. For example, the resilient section is formed by a comb structure or intertwined grooves 19a,19b,19b.

In one embodiment, the resilient sections 19 are configured to provide a linear guidance of the inertial mass of the inertial section 16 along the sensing direction Y between the support sections 13,14. In some embodiments, cutout lines between one or more support sections 13,14 and the inertial section 16 are cut as intertwined fingers to form the resilient sections 19 there between. For example, the resilient sections 19 act as leaf springs when stacked together. In some embodiments, the stack of modular plates forms a mass spring system with a resonance frequency determined by a spring constant provided by the resilient sections and a mass provided by the inertial section 16. For example, this may be beneficial to provide resonant enhancement of stretching/compressing the fiber at a particular frequency or band.

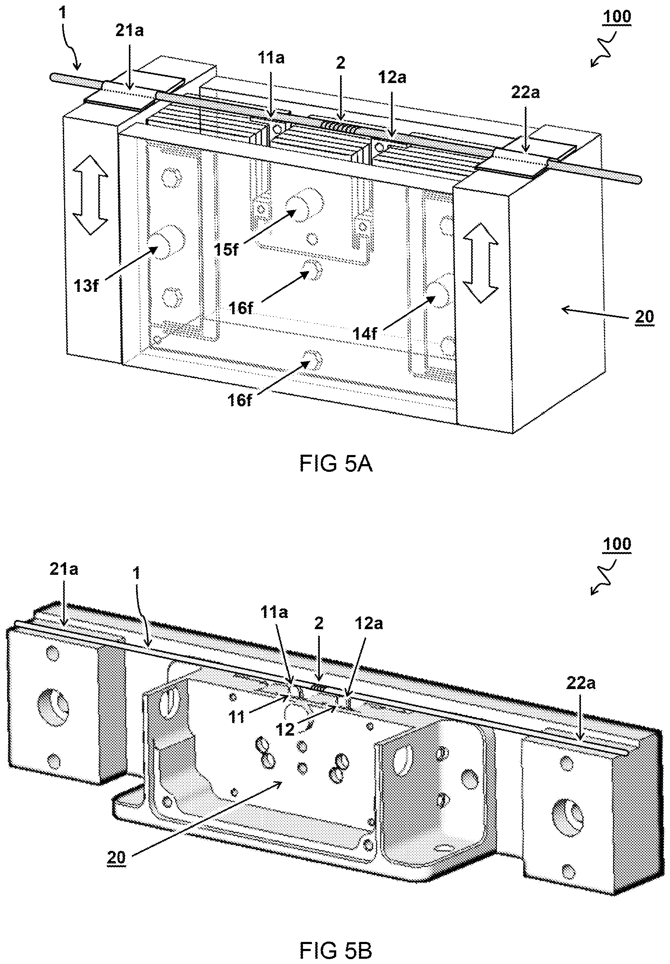

FIG 5A illustrates a perspective view of a fiber optic accelerometer 100 with a frame 10 held via one or more of its support sections 13,14 in an external structure 20, e.g. using one or more external fixtures 13f, 14f, 15f. Optionally, the plates are internally held together by internal fixtures 16f e.g. to the inertial section 16. In the embodiment shown, an optical fiber 1 is attached to the ends 11a, 12a of the transmission arms with a sensor 2 there between. The sensor 2 may thus be used for measuring an acceleration or vibration A of the structure 20 in a particular measurement direction. In some embodiments, the system comprises an optical interrogator for reading out the optical strain sensor 2.

In one embodiment, as shown, the external structure 20 has extra fiber attachment point 21a,22a around the respective fiber attachment points 11a,12a. These can be used e.g. for pre-stretching the optical fiber 1, around the optical strain sensor 2. In this way for example the fiber may tend to compress when the respective fiber attachment points 11a, 12a are brought together, which can be measured. It may also reduce stress on the respective fiber attachment points 11a, 12a by e.g. gluing or otherwise fixing the fiber externally, such that the loads on the attachment points 11a and 12a are balanced.

FIG 5B illustrates another embodiment of the external frame 20. In this embodiment, the extra fiber attachment points 21a,22a are at a significant distance from the respective fiber attachment points 11a,12a to the transmission arms 11,12. The relatively long fiber length of the external part compared to the active fiber part may lower the extra mechanism stiffness. For example a distance between one of the external fiber attachment points 21a and the attachment point 11a to the transmission arm 11 may be longer than the distance between the respective fiber attachment points 11a,12a, e.g. by a factor two, three, four, or more.

In one embodiment (not shown), an embedded abutment structure is provided on one or more of the modular plates to abut the transmission arms 11,12 when the modular plates are assembled. By said abutment the structure may change a separation distance between the transmission arms 11,12 by a fixed amount from an equilibrium distance to a pre-tensioning distance. The pre-tensioning distance may be predetermined, in particular corresponding to a predetermined pre-tensioning parameter for the optical fiber 1. In a further embodiment, the optical fiber 1 with the optical strain sensor 2 is attached between the respective fiber attachment points 11a, 12a on the transmission arms 11,12 while the embedded abutment structure keeps the transmission arms 11,12 at the pre-tensioning distance. After the attachment, the embedded abutment structure can be removed to release the transmission arms 11,12 and pre-tension the optical fiber 1 with the optical strain sensor 2 there between according to the predetermined pre-tensioning parameter. For example, the abutment structure can be part of the mass-type plates 10m. For example, the abutment structure can be removed manually, breaking it off, laser cutting etcetera. It will be appreciated that the movement of the arms can generate a designed pre-tensioning in the fiber and as such may ensure reproducible and repeatable manufacturing at high efficiency.

For the purpose of clarity and a concise description, features are described herein as part of the same or separate embodiments, however, it will be appreciated that the scope of the invention may include embodiments having combinations of all or some of the features described. For example, while embodiments were shown for a particular stack of plates, also alternative ways may be envisaged by those skilled in the art having the benefit of the present disclosure for achieving a similar function and result. E.g. different plates or parts may be combined or split up into one or more alternative components. The various elements of the embodiments as discussed and shown offer certain advantages, such as improved manufacturability and versatility Of course, it is to be appreciated that any one of the above embodiments or processes may be combined with one or more other embodiments or processes to provide even further improvements in finding and matching designs and advantages. It is appreciated that this disclosure offers particular advantages to fiber optic based accelerometers, and in general can be applied for any application wherein an adaptable frame is desired.

Finally, the above-discussion is intended to be merely illustrative of the present systems and/or methods and should not be construed as limiting the appended claims to any particular embodiment or group of embodiments. The specification and drawings are accordingly to be regarded in an illustrative manner and are not intended to limit the scope of the appended claims. In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage. In particular, all working combinations of the claims are considered inherently disclosed.

## Claims

1. A deformable frame (10) for a fiber optic accelerometer (100), the frame (10) comprising
- one or more attachment sections (13,14,15) for attachment of the frame (10) to an external structure (20) whose acceleration (A) is to be measured;
- at least one inertial section (16) configured to allow a relative inertial motion (M) of its inertial mass with respect to the one or more accelerated attachment sections (13,14,15); and
- transmission arms (11,12) pivotably attached to respective bridge sections (17,18) between the at least one inertial section (16) and at least one attachment section (15) such that the relative inertial motion (M) of the inertial mass in a sensing direction (Y) causes a transverse motion (S) in each of the transmission arms (11,12) in respective transmission directions (X1,X2) transverse to the sensing direction (Y), wherein the transmission arms (11, 12) are arranged such that the transverse motions (S) of the transmission arms (11,12) are in opposite directions (X1,X2) for stretching and/or compressing an optical fiber (1) with an optical strain sensor (2) attachable between respective fiber attachment points (11a,12a) on said transmission arms (11,12); wherein
- the frame (10) is formed by an interconnected stack of modular plates (10m,10t).

2. The frame (10) according to claim 1, wherein the modular plates (10m,10t) are stacked in a stacking direction (Z) transverse to both the sensing direction (Y) and the transmission directions (X1,X2).

3. The frame (10) according to claim 1 or 2, wherein each modular plate (10m,10t) comprises a single flat plate shape with cutout lines between the sections (13,14,15,16), wherein the attachment sections (13,14,15) are disconnected from the inertial section (16) except for deformable bridges (17,18,19) formed between the cutout lines there between.

4. The frame (10) according to any of the preceding claims, wherein a thickness of the frame (10) is determined by a sum of thicknesses of the modular plates (10m, 10t).

5. The frame (10) according to any of the preceding claims, wherein the total inertial mass and/or rigidity of the frame is variable by interconnection of a variable number and/or type of the modular plates (10m, 10t).

6. The frame (10) according to any of the preceding claims, wherein the interconnected stack comprises at least two distinct types of modular plates (10m,10t) with
- a mass-type plate (10m) comprising at least a part (16m) of the inertial section (16), and
- a transmission-type plate (10t) comprising at least respective parts (11t,12t) of the transmission arms (11,12).

7. The frame (10) according to any of the preceding claims, wherein at least some of the plates (10m) have no transmission arms (11,12) extending to the optical fiber (1).

8. The frame (10) according to any of the preceding claims, wherein a bridge length (L17) of a respective bridge section (17) extends between a respective first bridge attachment point (17a) on a side of the attachment section (15) and a respective second bridge attachment point (17b) on a side of the inertial section (16), wherein an arm length (L11) of a respective transmission arm (11,12) extends between the respective bridge section (17) and the respective fiber attachment point (11a), wherein a ratio between the arm length (L11) of the respective transmission arm (11) and the bridge length (L17) of the respective bridge section (17) determines a transmission ratio with which a inertial motion (M) of the inertial mass along the sensing direction (Y) is transmitted by the respective transmission arm (11,12) in the transverse motion (S) along the respective transmission direction (X) for stretching and/or compressing the optical fiber (1).

9. The frame (10) according to any of the preceding claims, wherein the attachment sections (13,14,15) comprise one or more support sections (13, 14) for supporting the inertial section (16) via respective resilient sections (19), wherein the resilient sections (19) are configured to provide a linear guidance of the inertial mass of the inertial section (16) along the sensing direction (Y) between the support sections (13,14).

10. A fiber optic accelerometer (100) comprising
- the frame (10) according to any of the preceding claims; and
- an optical fiber (1) attached to the transmission arms (11,12) with an optical strain sensor (2) there between.

11. A system for measuring acceleration (A) of a structure (20), the system comprising the accelerometer (100) according to claim 10 attached with one or more of its attachment sections (13,14,15) to the structure (20).

12. The system according to claim 11, wherein the structure (20) has extra fiber attachment point (21a,22a) around the respective fiber attachment points (11a,12a) for pre-stretching the optical fiber (1).

13. A method for constructing a deformable frame (10) for a fiber optic accelerometer (100), the frame (10) comprising
- one or more attachment sections (13,14,15) for attachment of the frame (10) to an external structure (20) whose acceleration (A) is to be measured;
- at least one inertial section (16) configured to allow a relative inertial motion (M) of its inertial mass with respect to the one or more accelerated attachment sections (13,14,15); and
- transmission arms (11,12) pivotably attached to respective bridge sections (17,18) between the at least one inertial section (16) and at least one attachment section (15) such that the relative inertial motion (M) of the inertial mass in a sensing direction (Y) causes a transverse motion (S) in each of the transmission arms (11,12) in respective transmission directions (X1,X2) transverse to the sensing direction (Y), wherein the transverse motions (S) of the transmission arms (11,12) are in opposite directions (X1,X2) for stretching and/or compressing an optical fiber (1) with an optical strain sensor (2) attached between respective fiber attachment points (11a,12a) on said transmission arms (11,12); wherein the method comprises
- forming the frame (10) by interconnecting a stack of modular plates (10m,10t).

14. The method according to claim 13, wherein the method comprises
- determining a desired resonance frequency of the frame (10); and
- combining modular plates (10m, 10t) to achieve an inertial mass and/or stiffness of the frame matching the desired resonance frequency and detection sensitivity to vibrations.

15. The method according to claim 13 or 14, comprising
- providing an embedded abutment structure on one or more of the modular plates (10m,10t) to abut the transmission arms (11,12) when the modular plates (10m, 10t) are assembled and, by said abutment change a separation distance between the transmission arms (11,12) by a fixed amount from an equilibrium distance to a pre-tensioning distance corresponding to a predetermined pre-tensioning parameter;
- attaching the optical fiber (1) with the optical strain sensor (2) between the respective fiber attachment points (11a, 12a) on the transmission arms (11,12) while the embedded abutment structure keeps the transmission arms (11,12) at the pre-tensioning distance; and
- removing the embedded abutment structure to release the transmission arms (11,12) and pre-tension the optical fiber (1) with the optical strain sensor (2) there between according to the predetermined pre-tensioning parameter.

## Patentansprüche

1. Verformbarer Rahmen (10) für einen faseroptischen Beschleunigungsmesser (100), wobei der Rahmen (10) umfasst
- einen oder mehrere Befestigungsabschnitte (13, 14, 15) zum Befestigen des Rahmens (10) an einer äußeren Struktur (20), deren Beschleunigung (A) gemessen werden soll;
- mindestens einen Trägheitsabschnitt (16), der konfiguriert ist, um eine relative Trägheitsbewegung (M) seiner Trägheitsmasse in Bezug auf den einen oder die mehreren beschleunigten Befestigungsabschnitte (13, 14, 15) zu ermöglichen; und
- Übertragungsarme (11, 12), die schwenkbar an den jeweiligen Brückenabschnitten (17, 18) zwischen dem mindestens einen Trägheitsabschnitt (16) und mindestens einem Befestigungsabschnitt (15) angebracht sind, so dass die relative Trägheitsbewegung (M) des Trägheitsmasse in einer Erfassungsrichtung (Y) eine Querbewegung (S) in jedem der Übertragungsarme (11, 12) bewirkt in jeweiligen Übertragungsrichtungen (X1, X2) quer zur Erfassungsrichtung (Y), wobei die Übertragungsarme (11) , 12) so angeordnet sind, dass die Querbewegungen (S) der Übertragungsarme (11, 12) in entgegengesetzte Richtungen (X1, X2) verlaufen zum Strecken und / oder Komprimieren einer optischen Faser (1) mit einem optischen Dehnungssensor (2) anbringbar zwischen den jeweiligen Faserbefestigungspunkten (11a, 12a) an den Übertragungsarmen (11, 12); worin
- der Rahmen (10) besteht aus einem miteinander verbundenen Stapel modularer Platten (10m, 10t).

2. Rahmen (10) nach Anspruch 1, wobei die modularen Platten (10m, 10t) in einer Stapelrichtung (Z) quer zur Erfassungsrichtung (Y) und zur Übertragungsrichtung (X1, X2) gestapelt sind.

3. Rahmen (10) nach Anspruch 1 oder 2, wobei jede modulare Platte (10m, 10t) eine einzelne flache Plattenform mit Ausschnittlinien zwischen den Abschnitten (13, 14, 15, 16) umfasst, wobei die Befestigungsabschnitte (13, 14, 15) vom Trägheitsabschnitt (16) getrennt sind, mit Ausnahme der verformbaren Brücken (17, 18, 19), die zwischen den dazwischen liegenden Ausschnittslinien gebildet werden.

4. Rahmen (10) nach einem der vorhergehenden Ansprüche, wobei eine Dicke des Rahmens (10) durch eine Summe der Dicken der modularen Platten (10m, 10t) bestimmt wird.

5. Rahmen (10) nach einem der vorhergehenden Ansprüche, wobei die Gesamtträgheitsmasse und / oder -steifigkeit des Rahmens durch Zusammenschalten einer variablen Anzahl und / oder eines Typs der modularen Platten (10m, 10t) variabel ist.

6. Rahmen (10) nach einem der vorhergehenden Ansprüche, wobei der miteinander verbundene Stapel mindestens zwei verschiedene Arten von modularen Platten (10m, 10t) umfasst mit
- eine Massenplatte (10m), die mindestens einen Teil (16m) des Trägheitsabschnitts (16) umfasst, und
- eine Getriebeplatte (10t), die mindestens die jeweiligen Teile (11t, 12t) der Übertragungsarme (11, 12) umfasst.

7. Rahmen (10) nach einem der vorhergehenden Ansprüche, wobei mindestens einige der Platten (10m) keine Übertragungsarme (11, 12) aufweisen, die sich zur optischen Faser (1) erstrecken.

8. Rahmen (10) nach einem der vorhergehenden Ansprüche, wobei sich eine Brückenlänge (L17) eines jeweiligen Brückenabschnitts (17) zwischen einem jeweiligen ersten Brückenbefestigungspunkt (17a) auf einer Seite des Befestigungsabschnitts (15) erstreckt und einen jeweiligen zweiten Brückenbefestigungspunkt (17b) auf einer Seite des Trägheitsabschnitts (16), wobei sich eine Armlänge (L11) eines jeweiligen Übertragungsarms (11, 12) zwischen dem jeweiligen Brückenabschnitt (17) und dem erstreckt jeweiliger Faserbefestigungspunkt (11a), wobei ein Verhältnis zwischen der Armlänge (L11) des jeweiligen Übertragungsarms (11) und der Brückenlänge (L17) des jeweiligen Brückenabschnitts (17) ein Übertragungsverhältnis bestimmt, mit dem eine Trägheitsbewegung (M) der Trägheitsmasse entlang der Erfassungsrichtung (Y) vom jeweiligen Übertragungsarm (11, 12) in der Querbewegung (S) übertragen wird entlang der jeweiligen Übertragungsrichtung (X) zum Strecken und / oder Komprimieren der optischen Faser übertragen (1).

9. Rahmen (10) nach einem der vorhergehenden Ansprüche, wobei die Befestigungsabschnitte (13, 14, 15) einen oder mehrere Stützabschnitte (13, 14) zum Tragen des Trägheitsabschnitts (16) über entsprechende elastische Abschnitte (13) umfassen 19), wobei die elastischen Abschnitte (19) konfiguriert sind, um eine lineare Führung der Trägheitsmasse des Trägheitsabschnitts (16) entlang der Erfassungsrichtung (Y) zwischen den Stützabschnitten (13, 14) bereitzustellen.

10. Glasfaserbeschleunigungsmesser (100), umfassend
- den Rahmen (10) gemäß einem der vorhergehenden Ansprüche; und
- eine optische Faser (1), die an den Übertragungsarmen (11, 12) mit einem optischen Dehnungssensor (2) dazwischen angebracht ist.

11. System zum Messen der Beschleunigung (A) einer Struktur (20), wobei das System den Beschleunigungsmesser (100) nach Anspruch 10 umfasst, der mit einem oder mehreren seiner Befestigungsabschnitte (13, 14, 15) an der Struktur (20) befestigt ist.

12. System nach Anspruch 11, wobei die Struktur (20) einen zusätzlichen Faserbefestigungspunkt (21a, 22a) um die jeweiligen Faserbefestigungspunkte (11a, 12a) zum Vordehnen der optischen Faser (1) aufweist.

13. Verfahren zum Aufbau eines verformbaren Rahmens (10) für einen faseroptischen Beschleunigungsmesser (100), wobei der Rahmen (10) umfasst
- einen oder mehrere Befestigungsabschnitte (13, 14, 15) zum Befestigen des Rahmens (10) an einer äußeren Struktur (20), deren Beschleunigung (A) gemessen werden soll;
- mindestens einen Trägheitsabschnitt (16), der konfiguriert ist, um eine relative Trägheitsbewegung (M) seiner Trägheitsmasse in Bezug auf den einen oder die mehreren beschleunigten Befestigungsabschnitte (13, 14, 15) zu ermöglichen ; und
- Übertragungsarme (11, 12), die schwenkbar an den jeweiligen Brückenabschnitten (17, 18) zwischen dem mindestens einen Trägheitsabschnitt (16) und mindestens einem Befestigungsabschnitt (15) angebracht sind, so dass die relative Trägheitsbewegung (M) des Trägheitsmasse in einer Erfassungsrichtung (Y) eine Querbewegung (S) in jedem der Übertragungsarme (11, 12) bewirkt in jeweiligen Übertragungsrichtungen (X1, X2) quer zur Erfassungsrichtung (Y), wobei die Querbewegungen (S) der Übertragungsarme (11, 12) sich in entgegengesetzten Richtungen (X1, X2) befinden zum Strecken und / oder Komprimieren einer optischen Faser (1) mit einem optischen Dehnungssensor (2), der zwischen den jeweiligen Faserbefestigungspunkten (11a, 12a) an den Übertragungsarmen (11, 12) angebracht ist; wobei das Verfahren umfasst
- bilden des Rahmens (10) durch Verbinden eines Stapels modularer Platten (10m, 10t).

14. Verfahren nach Anspruch 13, wobei das Verfahren umfasst
- Bestimmen einer gewünschten Resonanzfrequenz des Rahmens (10); und
- Kombinieren von modularen Platten (10m, 10t), um eine Trägheitsmasse und / oder Steifheit des Rahmens zu erreichen, die der gewünschten Resonanzfrequenz und Erfassungsempfindlichkeit gegenüber Vibrationen entspricht.

15. Verfahren nach Anspruch 13 oder 14, umfassend
- Bereitstellen einer eingebetteten Abutmentstruktur auf einer oder mehreren der modularen Platten (10m, 10t), um an den Übertragungsarmen (11, 12) anzustoßen, wenn die modularen Platten (10m, 10t) zusammengebaut werden, und durch das Abutment ändern einen Abstand zwischen die Übertragungsarmen (11, 12) um einen festen Betrag von einem Gleichgewichtsabstand zu einem Vorspannungsabstand, der einem vorbestimmten Vorspannungsparameter entspricht;
- Anbringen der optischen Faser (1) mit dem optischen Dehnungssensor (2) zwischen den jeweiligen Faserbefestigungspunkten (11a, 12a) an den Übertragungsarmen (11, 12), während die eingebettete Abutmentstruktur die Übertragungsarme (11, 12) im Vorspannungsabstand hält; und
- Entfernen der eingebetteten Abutmentstruktur, um die Übertragungsarme (11, 12) freizugeben und die optische Faser (1) mit dem optischen Dehnungssensor (2) dazwischen gemäß dem vorbestimmten Vorspannungsparameter vorzuspannen.

## Revendications

1. Cadre déformable (10) pour un accéléromètre à fibre optique (100), le cadre (10) comprenant
- une ou plusieurs sections de fixation (13, 14, 15) pour la fixation du cadre (10) à une structure externe (20) dont l'accélération (A) doit être mesurée ;
- au moins une section inertielle (16) configurée pour permettre un mouvement inertiel relatif (M) de sa masse inertielle par rapport à une ou plusieurs sections d'accrochage accéléré (13,14,15) ; et
- des bras de transmission (11, 12) fixés de manière pivotante à des sections de pont respectives (17, 18) entre la au moins une section d'inertie (16) et au moins une section de fixation (15) de telle sorte que le mouvement d'inertie relatif (M) de l'inertie masse dans une direction de détection (Y) provoque un mouvement transversal (S) dans chacun des bras de transmission (11, 12) dans des directions de transmission respectives (X1, X2) transversales à la direction de détection (Y), les bras de transmission (11, 12) étant agencés de telle sorte que les mouvements transversaux (S) des bras de transmission (11, 12) soient dans des directions opposées (X1, X2) pour étirer et / ou comprimer une fibre optique (1) avec un capteur de déformation optique (2) pouvant être attaché entre des points de fixation de fibre respectifs (11a, 12a) sur lesdits bras de transmission (11, 12) ;
- le cadre (10) étant formé par un empilement interconnecté de plaques modulaires (10m, 10t).

2. Cadre (10) selon la revendication 1, dans lequel les plaques modulaires (10m, 10t) sont empilées dans une direction d'empilement (Z) transversale à la fois à la direction de détection (Y) et aux directions de transmission (X1, X2).

3. Cadre (10) selon la revendication 1 ou 2, dans lequel chaque plaque modulaire (10m, 10t) comprend une seule forme de plaque plate avec des lignes de découpe entre les sections (13, 14, 15, 16), dans lequel les sections de fixation (13, 14, 15) sont déconnectés de la section inertielle (16) à l'exception des ponts déformables (17, 18, 19) formés entre les lignes de découpe.

4. Cadre (10) selon l'une quelconque des revendications précédentes, dans lequel une épaisseur du cadre (10) est déterminée par une somme des épaisseurs des plaques modulaires (10m, 10t).

5. Cadre selon l'une quelconque des revendications précédentes, dans lequel la masse inertielle totale et / ou la rigidité du châssis est variable par interconnexion d'un nombre et / ou d'un type variable des plaques modulaires (10m, 10t).

6. Cadre selon l'une quelconque des revendications précédentes, dans lequel l'empilement interconnecté comprend au moins deux types distincts de plaques modulaires (10m, 10t) avec
- une plaque de type massique (10m) comprenant au moins une partie (16m) de la section inertielle (16), et
- une plaque de type transmission (10t) comprenant au moins des parties respectives (11t, 12t) des bras de transmission (11, 12).

7. Cadre selon l'une quelconque des revendications précédentes, dans lequel au moins certaines des plaques (10m) n'ont pas de bras de transmission (11,12) s'étendant jusqu'à la fibre optique (1).

8. Cadre (10) selon l'une quelconque des revendications précédentes, dans lequel une longueur de pont (L17) d'une section de pont respective (17) s'étend entre un premier point de fixation de pont respectif (17a) sur un côté de la section de fixation (15) et un deuxième point de fixation de pont respectif (17b) sur un côté de la section inertielle (16), dans lequel une longueur de bras (L11) d'un bras de transmission respectif (11, 12) s'étend entre la section de pont respective (17) et la fibre respective point de fixation (11a), dans lequel un rapport entre la longueur de bras (L11) du bras de transmission respectif (11) et la longueur de pont (L17) de la section de pont respective (17) détermine un rapport de transmission avec lequel un mouvement d'inertie (M) de la masse d'inertie le long de la direction de détection (Y) est transmise par le bras de transmission respectif (11, 12) dans le mouvement transversal (S) le long de la direction de transmission respective (X) pour étirer et / ou comprimer la fibre optique (1).

9. Cadre (10) selon l'une quelconque des revendications précédentes, dans lequel les sections de fixation (13, 14, 15) comprennent une ou plusieurs sections de support (13, 14) pour supporter la section inertielle (16) via des sections élastiques respectives (19), dans lequel les sections élastiques (19) sont configurées pour fournir un guidage linéaire de la masse inertielle de la section inertielle (16) le long de la direction de détection (Y) entre les sections de support (13, 14).

10. Accéléromètre à fibre optique (100) comprenant
- le châssis (10) selon l'une quelconque des revendications précédentes ; et
- une fibre optique (1) fixée aux bras de transmission (11, 12) avec un capteur de contrainte optique (2) entre eux.

11. Système de mesure de l'accélération (A) d'une structure (20), le système comprenant l'accéléromètre (100) selon la revendication 10 fixé avec une ou plusieurs de ses sections de fixation (13, 14, 15) à la structure. (20).

12. Système selon la revendication 11, dans lequel la structure (20) a un point de fixation de fibre supplémentaire (21a, 22a) autour des points de fixation de fibre respectifs (11a, 12a) pour préétirer la fibre optique (1).

13. Procédé de construction d'un cadre déformable (10) pour un accéléromètre à fibre optique (100), le cadre (10) comprenant
- une ou plusieurs sections de fixation (13, 14, 15) pour la fixation du cadre (10) à une structure externe (20) dont l'accélération (A) doit être mesurée ;
- au moins une section inertielle (16) configurée pour permettre un mouvement inertiel relatif (M) de sa masse inertielle par rapport à une ou plusieurs sections d'accrochage accéléré (13,14,15) ; et
- des bras de transmission (11, 12) fixés de manière pivotante aux sections de pont respectives (17, 18) entre la au moins une section d'inertie (16) et au moins une section de fixation (15) de telle sorte que le mouvement d'inertie relatif (M) de l'inertie masse dans une direction de détection (Y) provoque un mouvement transversal (S) dans chacun des bras de transmission (11, 12) dans des directions de transmission respectives (X1, X2) transversales à la direction de détection (Y), les mouvements transversaux (S) des bras de transmission (11, 12) étant dans des directions opposées (X1, X2) pour étirer et / ou comprimer une fibre optique (1) avec un capteur de contrainte optique (2) fixé entre des points de fixation de fibre respectifs (11a, 12a) sur lesdits bras de transmission (11, 12) ; dans lequel le procédé comprend
- former le cadre (10) en interconnectant un empilement de plaques modulaires (10m, 10t).

14. Procédé selon la revendication 13, dans lequel le procédé comprend
- déterminer une fréquence de résonance souhaitée de la trame (10); et
- combiner des plaques modulaires (10m, 10t) pour obtenir une masse d'inertie et / ou une rigidité du cadre correspondant à la fréquence de résonance souhaitée et à la sensibilité de détection aux vibrations.

15. Procédé selon la revendication 13 ou 14, comprenant
- prévoir une structure de butée intégrée sur une ou plusieurs des plaques modulaires (10m, 10t) pour venir en appui contre les bras de transmission (11, 12) lorsque les plaques modulaires (10m, 10t) sont assemblées et, par ladite butée, modifier une distance de séparation entre les bras de transmission (11, 12) d'une quantité fixe d'une distance d'équilibre à une distance de pré-tension correspondant à un paramètre de pré-tension prédéterminé ;
- fixer la fibre optique (1) au capteur de contrainte optique (2) entre les points de fixation de fibre respectifs (11a, 12a) sur les bras de transmission (11, 12) tandis que la structure de butée intégrée maintient les bras de transmission (11, 12) à la distance de pré-tension ; et
- retirer la structure de butée intégrée pour libérer les bras de transmission (11, 12) et prétendre la fibre optique (1) avec le capteur de contrainte optique (2) entre eux selon le paramètre de pré-tension prédéterminé.
